# EUROPEAN PATENT APPLICATION

(11) **EP 2 226 523 A1**
(43) Date of publication of application: **08.09.2010**
(21) Application number: 09003071.9
(22) Date of filing: 04.03.2009
(51) Int. Cl.: F16D 41/12, F02N 15/02

(54) **Torque transmission and free-wheel system using pawls for start-drives**

(71) Applicant: ZEN SA INDUSTRIA METALURGICA, Busque SC (BR)
(72) Inventor: Medeiros, Faués Vinicius, Brusque SC 88355-100 (BR); Raimundi, Lindomar, Brusque SC 88355-100 (BR); Maurici, Allan, Brusque SC 88355-100 (BR); Buzani, Jackson Edebar, Brusque SC 88355-100 (BR); Bertolini, Odilmar, Brusque SC 88355-100 (BR); Vidotto, Rodrigo Augusto, Brusque SC 88355-100 (BR); Dutra, Raphael Ventura, Brusque SC 88355-100 (BR); Gomez, Marcelo Peregrina, Brusque SC 88355-100 (BR)
(74) Representative: Lorente Berges, Ana

(57) **Abstract**

"TORQUE TRANSMISSION AND FREE-WHEEL SYSTEM USING BLADES FOR START-PROPELLERS" is the description of the present invention, in the technical field of general start-propellers, more specifically a transmission and free-wheel system using blades for start-propellers, whose objective is a torque transmission model and free-wheel based on the use of blades (1), with application in torque transmission for engines and similar devices, aiming at reducing manufacturing costs, improving performance, reducing noise levels and increasing the equipment's useful life.

## Description

The invention pertains generally to start-propellers, more specifically to a torque transmission and free-wheel system using blades for start-propellers, whose purpose is a torque transmission and free-wheel model based on the use of blades, to be used in start-engines and similar devices, with the purpose of reducing manufacturing costs, improving performance, reducing noise levels and increasing its useful life.

Internal combustion engines need an auxiliary start system to start functioning. Such engines require a minimum rotation and the duration depends on the engine's design, temperature and other parameters.

The prior art provides manual and automatic start systems. In the case of automatic start systems, the electric start system is the most common and is characterized by the use of a start engine.

In practically all vehicles and equipment using combustion engines have and depend on a start engine. Such device has two parts, an electric portion and a mechanical portion. The electric portion counts on a solenoid and an armature. The mechanical portion has a carcass, connection lever and start-propeller.

The start-propeller's primary function is to transmit the electric motor's torque to the internal combustion-engine. This torque is limited to the propeller's design and materials used.

The combustion engines have a minimum operational rotation called slow-running gear, which provides, at least, twice the start rotation. Due to such condition, the propeller has a secondary function called free-wheel, which is extremely important to avoid start-engine's over-rotation.

After the start of the combustion-engine, the start rotation increases to a higher rotation speed and, at least, reaches the slow-running gear speed. Such rotation increase, due to the big transmission relation between the combustion-engine and the start-engine, if the free-wheel is not used, would generate extreme rotation speed to the armature and would damage the armature's axle (commutator's centrifuging, warping, among other things), and/or other internal components.

Automakers are demanding more and more from their suppliers, they want products which expanded the useful lives of their products and that, at the same time, are able to decrease costs. So, automotive industry's suppliers are looking for new technologies in order to be more competitive than other competitors.

The market already knows start-propellers using free-wheel systems exist, such as: evolving roller system, copper lamella, ratchet and sprags.

Heavy-line propellers, that is, the ones used in high piston-displacement engines, use the ratchet free-wheel system, as described in patent US 4425812. The ratchet-propeller components have critical portions and very restricted tolerance files, which increase production costs.

The centrifuging weight-mass variation, for instance, significantly compromises the product's useful life, as the start-propeller does not detach itself, which causes premature wearing.

The detachment of such propellers occurs, approximately, when the pinion reaches a rotation of 11000 rpm. At said speed, the three contrifuging weights are displaced, in radial, and with this movement there is the spacing of the pinion's ratchets and coupling.

In the propellers occur the eventual shock of the pinion's tooth with the combustion-enginc rack's tooth. If, besides this condition, there is also overlapping of ratchets, that is, the pinion stops in an angular position in which the pinion ratchet's tooth is not coupled to the coupling ratchet's tooth, the forward-movement force (gearing) is excessively increased, which impedes the operation in this start attempt. With the vibrations generated by the start attempt, the pinion moves angularly and couples its ratchet's tooth to the coupling tooth. The system then operates normally the next time the start is attempted, provided the same above-described configuration does not occur.

During the first starts, in this kind of propeller, the teeth's brims are broken because of the compression forces and the impact and friction.

The prior art offers more complex mechanisms, which demand a larger number of parts and, consequently, aggregate more manufacturing and material costs. Furthermore, the majority of them is excessively noisy, owing to the ratchets, which is a considerable drawback.

The proposed invention does not use ratchets and many other components used in the prior art and it provides a much simpler and more efficient solution, in order to improve the functioning, facilitate the manufacturing and assembling, reducing costs and noise levels.

The present invention provides a versatile, efficient and functional torque transmission and free-wheel system using blades for start-propellers, which has a set of blades, a spring, a coupling element and a pinion with evolvent, which are connected to all other components, forming more efficient, economical, silent and durable start-propellers.

The parts may vary in size, format and material, so that they can be adapted to any start-propeller model, but they all have the same characteristics given in the present invention.

Besides all mentioned improvements, the blades solve an important issue, the fragility problem, present in the prior, through the elimination of the ratchets' brims, with the pinion coupling, and also the overlapping of ratchets' tooth over tooth.

The present invention offers three start-propeller models, using the blade system. They all work almost the same way, what changes are the parts' configurations and models.

Each start-propeller, in the present invention, has a coupling cylindrical part, in which a portion provides several housing slots where the blades are accommodated. Said blades are pressed against a, ring-shaped, pressure wire, which forces the blades' edges or latches to revolve outwards, away from the coupling slots, and, consequently, mount them in the open slots, along the internal wall of the pinion's ratchet.

### Description of the Operation

The present invention works or starts its operation when the combustion engine's key is turned. The start-key energizes the solenoid, which advances the propeller to the combustion-engine's rack. After starting the solenoid, the armature rotates the propeller.

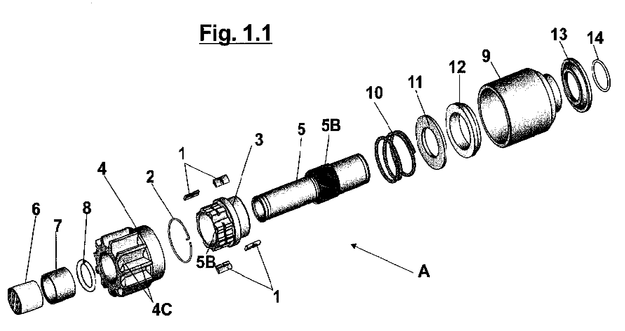

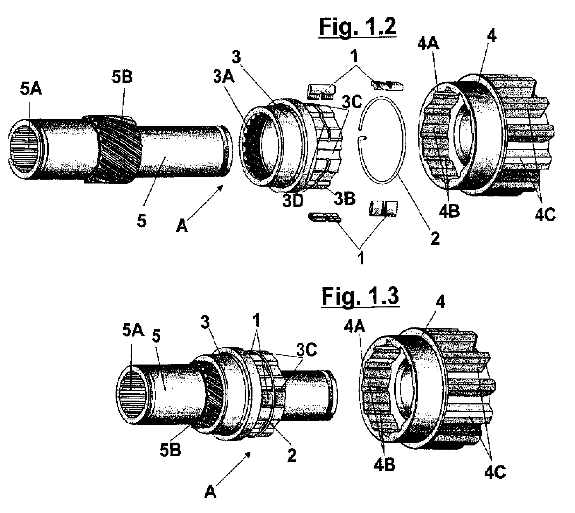

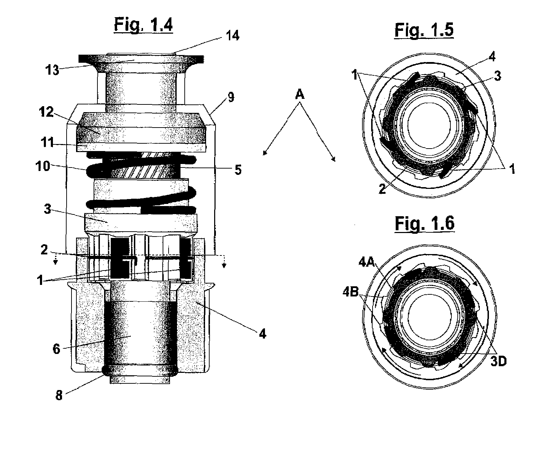

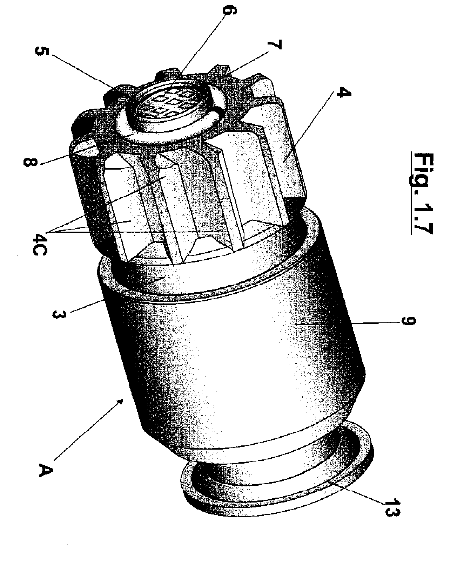

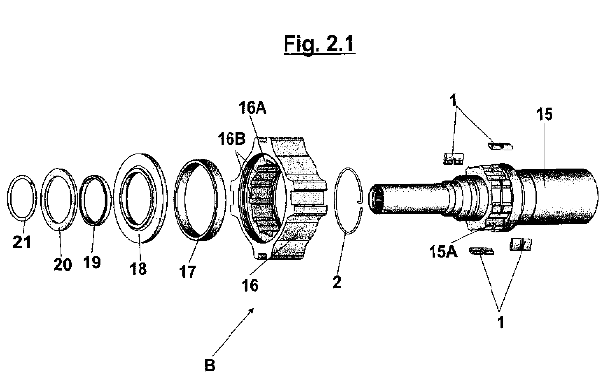

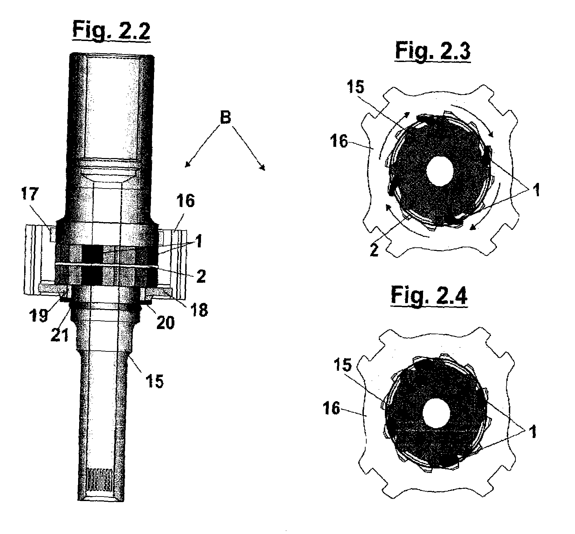

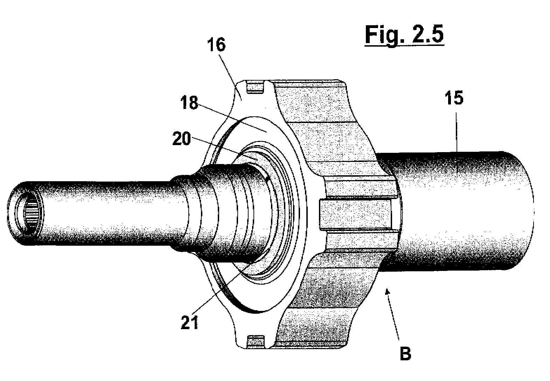

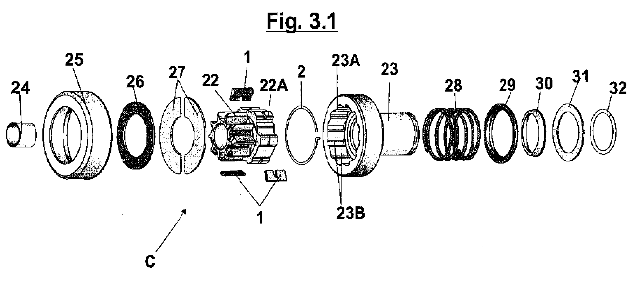

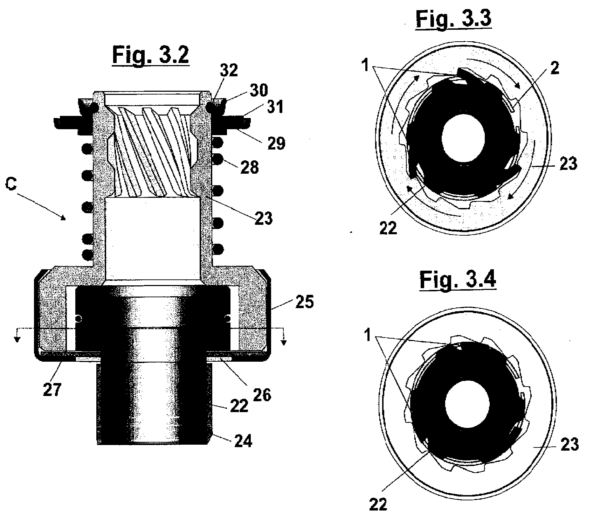

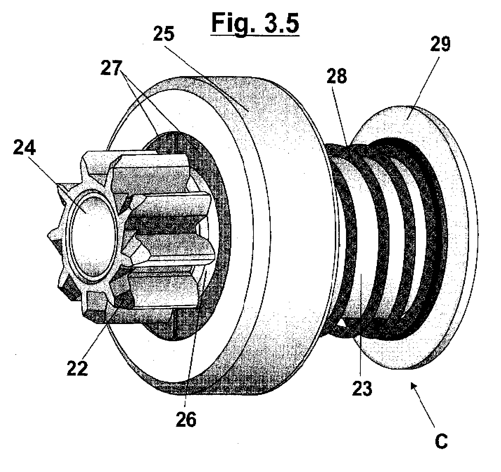

The propellers' blades (A, B and C) are always forced by the spring (2) to remain in the open position (figures 1.5, 2.3 et3.3).

Whenever the armature's rotation is higher than the pinion's rotation, the propeller's external evolvent rotates, coupling the blades, which transmit the electric-motor's torque to the combustion engine.

The combustion-engine starts working, increasing its rotation and, consequently, increasing the propeller's rotation to higher values. When the pinion's rotation exceeds the armature's rotation, the system starts functioning in the free-wheel mode, for protection. The evolvent forces the blades' retraction, turning around its axle (figures 1.6, 2.4 and 3.4) allowing the pinion's rotation, faster than the armature's rotation.

After starting the engine, the user stops the start, turning the key back to the neutral position. At this point, the start solenoid is deactivated, retracting the propeller. So, the pinion detaches itself from the rack.

The objectives, advantages and all other important characteristics of the present invention may be easily understood when seen all together, in the figures below:
Figure 1.1 represents an exploded view of the torque transmission and free-wheel system using blades for start-propellers, full version.
Figure 1.2 shows an exploded view of the torque transmission and free-wheel system using blades for start-propellers, displaying the main components of the present invention.
Figure 1.3 discloses an exploded view of the torque transmission and free-wheel system using blades for start-propellers, displaying the disposition of the invention's main components.
Figure 1.4 shows a side-cut view of the start-propeller, with the torque transmission and free-wheel system, using blades for start-propellers, in the full version.
Figure 1.5 represents a top-cut view of the torque transmission and free-wheel system using blades for start-propellers, in the disposition of torque transmission.
Figure 1.6 depicts a top-cut view of the torque transmission and free-wheel system using blades for start-propellers, in the disposition of free-wheel.
Figure 1.7 shows a view in perspective of the start-propeller with torque transmission and free-wheel system using blades tor start-propellers.
Figure 2.1 represents an exploded view of the start-propeller, with torque transmission and free-wheel system using blades for start-propellers, in the full version.
Figure 2.2 displays a side-cut view of the start-propeller with torque transmission and free-wheel system using blades for start-propellers.
Figure 2.3 represents a top-cut view of the torque transmission and free-wheel system using blades for start-propellers, in the disposition of torque transmission.
Figure 2.4 shows a top-cut view of the torque transmission and free-wheel system using blades for start-propellers, in the disposition of free-wheel.
Figure 2.5 represents a view in perspective of the start-propeller with torque transmission and free-wheel system using blades for start-propellers.
Figure 3.1 depicts a view in perspective of the start-propeller with torque transmission and free-wheel system using blades for start-propellers.
Figure 3.2 represents a side-cut view of the start-propeller with torque transmission and free-wheel system using blades for start-propellers.
Figure 3.3 shows a top-cut view of the torque transmission and free-wheel system using blades for start-propellers, in the disposition of torque transmission.
Figure 3.4 represents a top-cut view of the torque transmission and free-wheel system using blades for start-propellers, in the disposition of free-wheel.
Figure 3.5 shows a view in perspective of the start-propeller in the torque transmission and free-wheel system using blades for start-propellers.

As shown in the enclosed figures, which illustrate well and are part of the present invention called "Torque transmission and free-wheel system using blades for start-propellers", it was developed to be used in new propellers, to replace any model of star-propeller, present in combustion engines, and that encompasses the use of blades (1), together with a housing portion and a portion with a ratchet, in start-propellers.

Figure (1.1) shows an exploded view of all components that are part of the start-propeller (A), highlighting the blades (1), the pressure wire (2), the coupling cube (3), the pinion with ratchet (4), the axle (5), the bushings (6) and (7), the pressure ring (8), the mug (9), the spring (10), the washer (11), the cushion ring (12), the guide ring (13) and the pressure ring (14).

The figures (1.2) and (1.3) display exploded views of the sets, which form the system's main components, highlighting the axle (5), cylindrical format, which was a gear (5A) in the inner side and a helicoidal gear (5B), placed in the external side, and being mounted in the helicoidal gear (3A), the coupling cube (3), which as a cylindrical portion (3B), with the housing slots (3C), for the blades (1) and the gutters (3D), to fix the pressure wire (2). The cylindrical portion (3B), together with the blades (1) and the pressure wire (2), are coupled to the ratchet (4A), of the pinion with ratchet (4), and this portion has, in its inner side, several cut slots (4B). The pinion with ratchet (4) has a frontal gear (4C), to be connected to the engine's rack.

The Figure (1.4) displays a side-cut view of the propeller (A), highlighting the position of each and every component.

In figures (1.5) and (1.6) it is possible to see cut views of the blades (1) while functioning, and in Figure (1.5) we see the blades' torque (1) rotating the pinion with ratchet (4) and Figure (1.6) discloses the pinion in a higher speed, rotating in free-wheel.

And Figure (1.7) is a view in perspective of the start-propeller (A).

In the pinion with ratchet (4) of the start-propeller (A) there is the bedded-bushing (6). The bushing slides over the axle (5), where the following components are mounted: the pressure ring (14), the bedded-bushing in the armature (7) and the coupling cube (3). The pressure ring (14) secures the guide ring (13), which is used to transmit the axial movement to the propeller, to the combustion-engine steering and also all around it.

The axle (5) is bedded by the mug (9) in the end opposite to the bushings (6) and (7) the mug (9) is to protect the propeller's internal components against shock, grease contamination and from foreign bodies. The pressure ring (8) is to work as retention of the pinion (4) and, as consequence, of all other internal components.

The internal spring (10) is used to ensure the indexation course, necessary when the teeth of the frontal gear (4C) collide with the rack's teeth.

The blades (1) - which are the components responsible for transmitting the torque - are mounted in the housing slots (3C) of the coupling cube (3) and are positioned in the pinion with ratchet (4) where they are kept in this position by means of a pressure wire (2).

The condition of torque transmission occurs when the blades (1) are in the coupled positions. In the period of time between the engine's ignition and the removal of the steering propeller, there is the free-wheel, when the rotation of the pinion with ratchet (4) is higher than the rotation of the rest of the propeller. At this point, the blades (1) do not transmit torque to the combustion-engine and they receive the impacts from its ends owing to the difference between the pinion's rotation (4) and the coupling cube (3).

When the pressure ring (8) is fixed to the mug (9), at the moment the torque is transmitted to the vehicle's engine, there is compression on the cushion-washer (12). This is due to the torque's reaction from the armature of the start-motor. The tendency, during the start, is to push the axle (5) to the bottom of the mug (9), and displace the pinion (4) against the pressure ring (8). When we have the pressure ring fixed to the axle (5), the traction of the axle (5) occurs.

In Figure (2.1) it is shown an exploded view of all components of the start-propeller (B), highlighting the blades (1); pressure wire (2); axle (15), with a coupling section (15A); the cube (16), with a ratchet (16A), and several cut slots (16B); the bushing (17); the lid (18), the small bushing (19), the washer (20) and the pressure ring (21).

In Figure (2.2) it is displayed a side-cut view of the propeller (B), highlighting the components' positions.

In Figures (2.3) and (2.4) we can see cut views of the blades (1) in operation, in Figure (2.3) we see the torque from the cube (16) over the blades (1) rotating the axle (15) and in Figure (2.4) we see the axle (15) in a higher speed, rotating in free-wheel.

In Figure (2.5) it is displayed a view in perspective of the start-propeller (B).

In Figure (3.1) it is shown an exploded view of all components that are part of the start-propeller (C), highlighting the blades (1); the pressure wire (2); the pinion (22), the housing slots (22A); the trailing (23), with a ratchet (23A), and several cut slots (23B); the bushing (24); the lid (25), the washer (26); the semi-washers (27); the spring (28); the spring-support (29); the ring-support (30); the washer (31) and the pressure ring (32).

In Figure (3.2) it is disclosed a side-cut view of the propeller (C), highlighting the components' positions.

In Figures (3.3) and (3.4) we can see cut views of the blades (1) in operation, in Figure (3.3) we see the torque from the trailing (23) rotating the pinion (22) and in Figure (3.4) we see the pinion (22) in a higher speed, rotating in free-wheel.

In Figure (3.5) it is shown a view in perspective of the start-propeller (C).

All versions in these applications may vary, inverting the positions of the blades (1), placing them in the ratchet's portion and not in the housing portion.

## Claims

1. "Torque transmission and free-wheel system USING BLADES FOR START-PROPELLERS", was developed to he used in new propellers, to replace any prior start-propeller model, present in combustion-engines, and is **characterized by** the use of the blades (1), together with a housing part and a part with a ratchet, in start-propellers.

2. "Torque transmission and free-wheel system USING BLADES FOR START-PROPELLERS", in accordance with claim 1 is **characterized by** the use of the blades (1) of, at least, one applied unit.

3. "Torque transmission and free-wheel system USING BLADES FOR START-PROPELLERS", in accordance with claim 1 is **characterized by** having blades (1), placed in the pinion or coupling and vice-versa with its evolvent.

4. "Torque transmission and free-wheel system USING BLADES FOR START-PROPELLERS", in accordance with claim 1 is **characterized by** having a pressure wire (2) to position and fix the blades (1).

5. "Torque transmission and free-wheel system USING BLADES FOR START-PROPELLERS", in accordance with claim 1 is **characterized by** having springs to position and fix the blades (1).

6. "Torque transmission and free-wheel system USING BLADES FOR START-PROPELLERS", in accordance with claim 1 is **characterized by** a start-propeller (A), formed by the blades (1), a pressure wire (2), coupling cube (3), a pinion with ratchet (4), an axle (5), bushings (6) and (7), pressure ring (8), mug (9), spring (10) washer (11), cushion ring (12), guide ring (13) and a pressure ring (14).

7. "TORQUE TRANSMISSION AND FREE-WHEEL SYSTEM USING BLADES FOR START-PROPELLERS", in accordance with claim 1 is **characterized by** the start-propeller (B), formed by the blades (1); the pressure wire (2); the axle (15), with housing slots (15A); the cube (16), with a ratchet (16A), with several cut-slots (16B); the bushing (17); the lid (18), the small bushing (19), the washer (20) and the pressure ring (21).

8. "Torque transmission and free-wheel system USING BLADES FOR START-PROPELLERS", in accordance with claim 1 is **characterized by** a start-propeller (C), formed by the blades (1); the pressure wire (2); the pinion (22), with housing slots (22A); the trailing part (23), with a ratchet (23A), with several cut-slots (23B); the bushing (24); the lid (25), the washer (26); the semi-washers (27); the spring (28); the spring-support (29); the ring-support (30); the washer (31) and the pressure ring (31).

9. "Torque transmission and free-wheel system USING BLADES FOR START-PROPELLERS", in accordance with claim 6 is **characterized by** having a fixation system for the propeller, by means of the pressure ring (8), mounted to the axle (5) or to any other ring, however, fixed to the mug (9).
